# EUROPÄISCHE PATENTSCHRIFT

(11) **EP 3 615 818 B1**
(45) Veröffentlichungstag und Bekanntmachung des Hinweises auf die Patenterteilung: **16.06.2021**
(21) Anmeldenummer: 18718089.8
(22) Anmeldetag: 03.04.2018
(51) Int. Cl.: F16B 25/00

(54) **HOLZSCHRAUBE**
WOOD SCREW
VIS À BOIS

(30) Priorität: 25.04.2017 AT 80042018
(43) Veröffentlichungstag der Anmeldung: 04.03.2020
(73) Patentinhaber: Avvio GmbH & Co Kg, 8042 Graz (AT)
(72) Erfinder: HUBMANN, Gerhard, 8042 Graz (AT)
(74) Vertreter: Margotti, Herwig Franz
(86) Internationale Anmeldenummer: PCT/AT2018/060071
(87) Internationale Veröffentlichungsnummer: WO 2018/195571

(56) Entgegenhaltungen:
- WO-A1-2014/191310
- DE-U1-202004 020 104
- JP-A- 2004 316 875

## Beschreibung

Die Erfindung betrifft eine Holzschraube, umfassend einen zylinderförmigen Schraubenschaft, an dessen einem Ende eine Spitze ausgebildet ist, einen Schraubenkopf, der an dem anderen Ende des Schraubenschafts ausgebildet ist, sowie zumindest einen Gewindeabschnitt, der sich von der Spitze in Richtung des Schraubenkopfes erstreckt, wobei der Gewindeabschnitt einen Gewindekern und eine um den Gewindekern umlaufende Gewindewendel mit mehreren Gewindeumdrehungen aufweist.

Holzschrauben dienen im Allgemeinen zur Befestigung oder Verbindung von aus Holz oder einem holzähnlichen Material bestehenden Bauteilen. Sie schneiden zu diesem Zweck eigenständig ein entsprechendes Gegengewinde in das Material, welches zur Aufnahme der an der Schraube auftretenden Kräfte dient. Herkömmliche Holzschrauben weisen einen zylinderförmigen Schraubenschaft mit einer kegelförmigen Spitze, und an dem der Spitze gegenüberliegenden Ende des Schraubenschafts einen Schraubenkopf auf. Von der Spitze entlang in Richtung des Schraubenkopfes erstreckt sich ein Gewindeabschnitt, welcher eine um einen Gewindekern umlaufende Gewindewendel aufweist. Die Gewindewendel besteht ihrerseits aus mehreren aufeinanderfolgenden Gewindeumdrehungen. Derartige Holzschrauben werden mit ihrer Spitze voran in ein Bauteil verschraubt, wobei das Material des Bauteils von der Holzschraube verdrängt und zerschnitten wird.

Eine wesentliche Kenngröße für Holzschrauben besteht in der Gewindeauszugskraft bzw. der Herausziehfähigkeit. Dies ist jene Haltekraft, welche von dem im Bauteil eingeschraubten Schraubengewinde zur Verbindung der miteinander verschraubten Bauteile zur Verfügung gestellt wird. Es ist offensichtlich, dass eine Holzschraube eine Konstruktion aufweisen sollte, welche eine hohe Gewindeauszugskraft bereitstellt.

Beim Einschrauben einer Holzschraube entsteht durch das verdrängte Material ein Druck, welcher sowohl auf die eingeschraubte Holzschraube, als auch innerhalb des Bauteilmaterials wirkt. Dieser Druck kann nachteilig dazu führen, dass aufgrund einer Spaltwirkung der eingeschraubten Holzschraube beim Einschrauben das Bauteil gesprengt bzw. zerstört wird. Des Weiteren führt der beim Einschrauben entstehende Druck zu einem erhöhten Kraftaufwand bzw. einem erhöhten Einschraubdrehmoment, welches beim Verschrauben der Holzschraube aufgebracht werden muss. Hierdurch entsteht der Nachteil, dass ein zu großes Einschraubdrehmoment dazu führen kann, dass die Holzschraube beim Einschrauben abgedreht, und somit das Bauteil beschädigt wird. Des Weiteren ist es wünschenswert, dass die Holzschraube ein Ausschraubdrehmoment aufweist, welches das Einschraubdrehmoment übersteigt.

Holzschrauben gemäß dem Stand der Technik zerschneiden in der Regel beim Einschrauben die Fasern des Materials, wodurch Späne produziert werden. Diese verbleiben im Gegengewinde, welches die Holzschraube schneidet. Dies bewirkt den Nachteil, dass hierdurch das Einschraubdrehmoment erhöht wird und gleichzeitig die Gewindeauszugskraft und das Ausschraubdrehmoment reduziert werden.

Im Stand der Technik sind unterschiedliche Ausführungen von Holzschrauben bekannt, welche zum Ziel haben, ein verringertes Einschraubdrehmoment sowie eine verringerte Spaltwirkung bei gleichzeitig erhöhter Gewindeauszugskraft bereitzustellen.

Die WO 2014/191310 offenbart beispielsweise eine Holzschraube, welche eine verbesserte Gewindeauszugskraft bereitstellt, wobei hierzu das Material, in welches die Holzschraube eingeschraubt wird, mittels Erhebungen, welche am Gewindekern angeordnet sind, beim Einschrauben nach außen gedrückt wird. Die DE 20 2004 020104 U1 offenbart eine Schraube.

Es ist die Aufgabe der vorliegenden Erfindung eine Holzschraube bereitzustellen, welche die genannten Eigenschaften weiter verbessert und die Nachteile des Standes der Technik vermeidet.

Erfindungsgemäß wird die vorliegende Aufgabe dadurch gelöst, dass mehrere aufeinanderfolgende Gewindeumdrehungen Vorsprünge aufweisen, welche alternierend im Wesentlichen in Richtung Schraubenkopf und im Wesentlichen in Richtung Spitze ausgebildet sind, wobei die Gewindeumdrehungen an den Positionen der Vorsprünge radiale Einbuchtungen aufweisen.

Die erfindungsgemäße Ausführung der Holzschraube sieht vor, an den Gewindeumdrehungen der Holzschraube Vorsprünge anzuformen, welche eine zusätzliche Verdrängung des Materials des Bauteils, in welches die Holzschraube eingeschraubt wird, in Längsrichtung der Holzschraube, zwischen den Gewindeumdrehungen zu bewirken.

Diese Verdrängung bewirkt eine reversible Verformung des Materials bei der Passage eines der Vorsprünge beim Eindrehen der Schraube, wodurch das Material danach wieder in den Ausgangszustand zurückkehren kann. Hierdurch wird vorteilhafterweise eine zusätzliche Fixierung der Holzschraube im Material des Bauteils bewirkt und somit die Gewindeauszugskraft erhöht. Ein weiterer Vorteil ist, dass in radialer Richtung durch die Vorsprünge keine zusätzliche Materialverdrängung stattfindet und der Druck durch das verdrängte Material nicht wesentlich erhöht wird, wodurch keine erhöhte Spaltwirkung durch die erfindungsgemäße Holzschraube im Vergleich zum Stand der Technik gegeben ist.

Vorteilhafte Ausgestaltungen der erfindungsgemäßen Holzschraube sowie alternative Ausführungsvarianten werden in weiterer Folge anhand der Figuren näher erläutert.
Figur 1 zeigt eine Ausführungsform einer erfindungsgemäßen Holzschraube in einer Seitenansicht.
Figur 1a zeigt einen Querschnitt durch die Holzschraube aus Figur 1 entlang der dort gekennzeichneten Schnittlinie A-A.
Figur 2 zeigt eine vergrößerte Ansicht eines Ausschnitts einer Gewindewendel der erfindungsgemäßen Holzschraube aus Figur 1.
Figur 2a zeigt einen Querschnitt durch die vergrößerte Ansicht des Ausschnitts der Holzschraube aus Figur 2 mit einer Gewindeumdrehung in Draufsicht.
Figur 3 zeigt eine weitere Ausführungsform einer erfindungsgemäßen Holzschraube in einer Seitenansicht.
Figur 3a zeigt Querschnitte durch die Holzschraube aus Figur 3 entlang der dort gekennzeichneten Schnittlinien A-A, B-B und C-C.

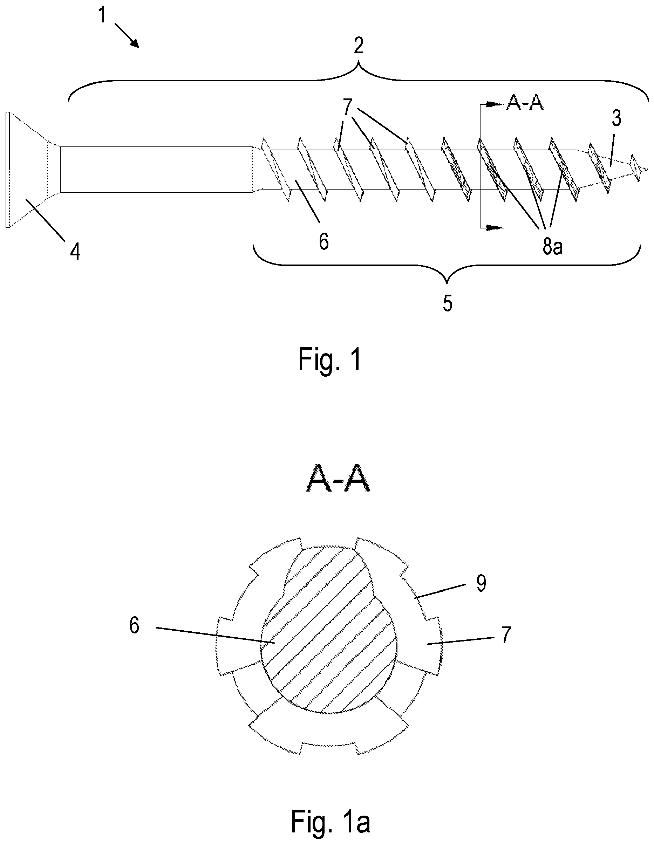

Figur 1 zeigt eine Ausführungsform einer erfindungsgemäßen Holzschraube 1, wobei die Holzschraube 1 einen zylinderförmigen Schraubenschaft 2, welcher an einem Ende eine Spitze 3 aufweist, umfasst. An einem gegenüberliegenden Ende ist ein Schraubenkopf 4 ausgebildet, welcher zum Ansatz eines Schraubwerkzeuges, wie beispielsweise eines Schraubendrehers, einer Schraubmaschine oder eines Schraubenschlüssels dient. Hierzu weist der Schraubenkopf 1 eine Form auf, welche einem beliebigen Schraubenkopfantrieb entspricht. Ausgehend von der Spitze 3 erstreckt sich ein Gewindeabschnitt 5 in Richtung des Schraubenkopfes 4. Dieser besteht aus einem Gewindekern 6, welcher eine umlaufende Gewindewendel mit mehreren aufeinanderfolgenden Gewindeumdrehungen 7 aufweist. Der Gewindeabschnitt 5 kann sich über den gesamten Schraubenschaft 2 erstrecken, oder nur über einen Teil von diesem, wie in der Ausführungsform von Figur 1 dargestellt. Beim Eindrehen der Holzschraube 1 in ein Material eines Bauteils, wird die Spitze 3 auf das Material gesetzt und die Holzschraube 1 mittels des Schraubwerkzeuges eingedreht. Hierbei verdrängt die Holzschraube 1 das Material, und formt hierbei selbstständig ein Gegengewinde in diesem aus.

Die Gewindeumdrehungen 7 weisen in der in Figur 1 dargestellten Ausführungsform über einen Teil der Gewindewendel an den Gewindeumdrehungen 7 Vorsprünge 8a, 8b auf, welche alternierend im Wesentlichen in Richtung Schraubenkopf 4 (Vorsprünge 8a) und in Richtung Spitze 3 (Vorsprünge 8b) ausgebildet sind. Die Vorsprünge 8a, 8b können sich über die gesamte Gewindewendel erstrecken, oder nur über Abschnitte von dieser. Die Vorsprünge 8a, 8b bewirken eine zusätzliche Materialverdrängung in Längsrichtung der Holzschraube 1 zwischen den Gewindeumdrehungen 7.

Beim Eindrehen der Holzschraube 1 aus Figur 1 wird das Material zwischen den Gewindeumdrehungen 7 durch die Vorsprünge 8a, 8b reversibel verformt. Hierbei ergibt sich der Vorteil, dass die Fasern des Materials nicht zerschnitten, oder Späne produziert werden, da Späne, welche nach dem Einschrauben im in das Material geschnittenen Gewinde verbleiben, sich nachteilig auf das Einschraubdrehmoment, das Ausschraubdrehmoment und die Gewindeauszugskraft auswirken.

Nach dem Vorbeigleiten eines Vorsprunges 8a, 8b beim Eindrehen der Holzschraube 1 legt sich das Material wieder an die Gewindeumdrehung 7 an. Bei einem Versuch die Schraube aus dem Material herauszuziehen oder herauszudrehen wirken die Vorsprünge vorteilhafterweise als Rückhaltevorrichtung, da diese Materialverdrängung beim Entfernen der Holzschraube 1 erneut stattfinden muss. Besonders vorteilhaft ist hierbei, dass die Vorsprünge 8a, 8b keine zusätzliche Materialverdrängung in radialer Richtung bewirken, und somit zu keiner erhöhten Spaltwirkung beitragen.

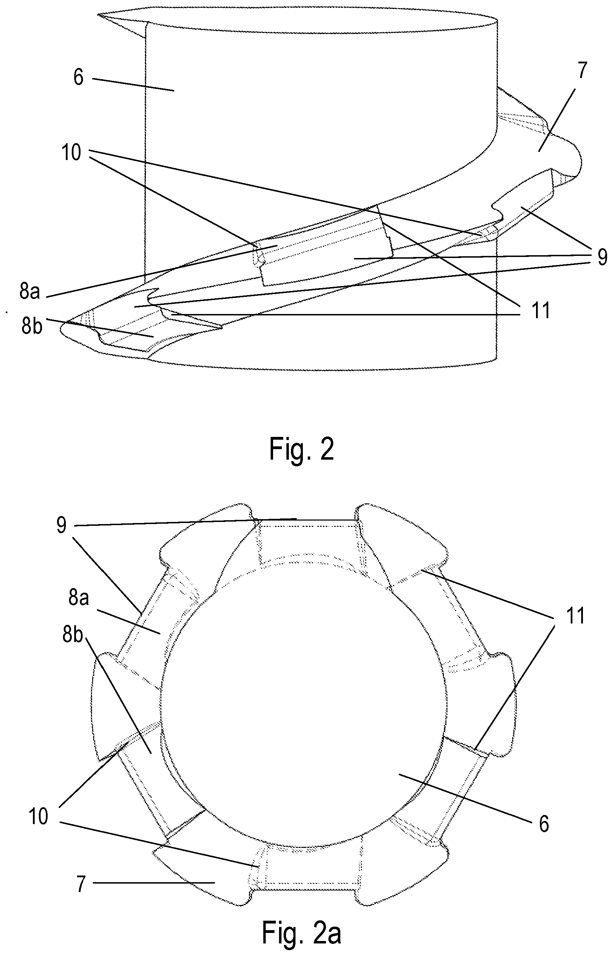

Figur 2 zeigt eine vergrößerte Ansicht eines Abschnitts des Gewindeabschnittes 5 der Holzschraube aus Figur 1, dessen Gewindeumdrehungen 7 Vorsprünge 8a, 8b aufweisen. An den Positionen der Vorsprünge 8a, 8b weist die dargestellte Holzschraube 1 in der dargestellten, bevorzugten Ausführungsform radiale Einbuchtungen 9 auf. Dies bietet den Vorteil, dass die Spaltwirkung der erfindungsgemäßen Holzschraube 1 zusätzlich reduziert wird. Besonders bevorzugt erstrecken sich die Einbuchtungen 9 über die gesamte Ausdehnung des entsprechenden Vorsprungs 8a, 8b entlang der Gewindeumdrehung 7, was hinsichtlich der Spaltwirkung besonders vorteilhaft ist.

An den jeweiligen Einbuchtungen 9 wird ein gewisses Volumen an Schraubenmaterial eingespart, welches jenem Schraubenmaterialvolumen entspricht, aus dem die jeweiligen Vorsprünge 8a, 8b gebildet sind. Diese Ausführung der Einbuchtungen 9 und der Vorsprünge 8a, 8b birgt fertigungstechnische Vorteile, da kein Schraubenmaterial im Produktionsprozess entfernt oder zugeführt werden muss.

Des Weiteren weisen die Vorsprünge 8a, 8b in Figur 2 führende Flanken 10 und nachlaufende Flanken 11 auf. Die führenden Flanken 10 sind hierbei jene Flanken der Vorsprünge 8a, 8b, welche in Eindrehrichtung der Holzschraube 1 zuerst mit dem Material in Kontakt kommen. Die führenden Flanken 10 sind in der bevorzugten Ausführungsform abgeschrägt ausgeformt. Dies bewirkt den Vorteil, dass das Einschraubdrehmoment reduziert wird.

Die nachlaufenden Flanken 11 können im Gegensatz dazu scharfe Kanten aufweisen, welche im Wesentlichen rechtwinkelig zu den Gewindeumdrehungen 7 abfallen. Diese Ausgestaltung der nachlaufenden Flanken 11 bewirkt den Vorteil, dass hierdurch eine Sperrwirkung erreicht wird, welche das Ausschraubdrehmoment stark erhöht. Durch die scharfen Kanten der nachfolgenden Flanken 11 ergibt sich der zusätzliche Vorteil, dass die Gewindeauszugskraft erhöht wird.

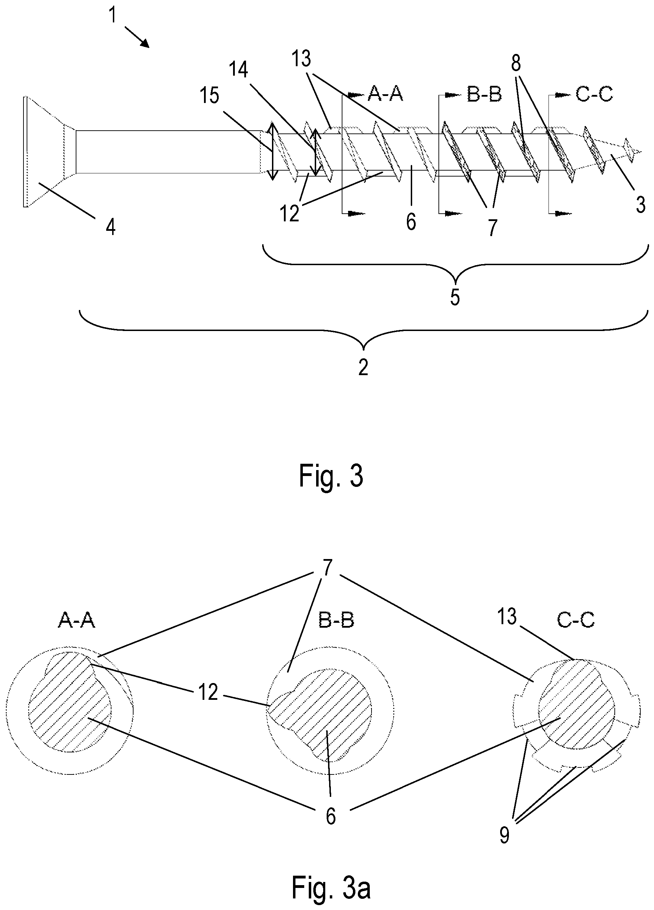

Figur 3 zeigt eine weitere Ausführungsform der erfindungsgemäßen Holzschraube 1, wobei die Holschraube 1 in dieser zusätzliche, am Gewindekern 6 radial nach außen verlaufende, Erhebungen 12 und 13 entlang des Gewindeabschnitts 5 aufweist. Diese erstrecken sich von der Spitze 3 der Holzschraube 1 in Längsrichtung der Holzschraube 1 zum Schraubenkopf 4. In der in Figur 3 dargestellten Ausführungsform sind die Erhebungen 12 und 13 entlang des gesamten Gewindeabschnitts 5 ausgeführt. In alternativen Ausführungsformn können die Erhebungen 12 und 13 auch nur an Teilabschnitten des Gewindeabschnittes 5 ausgeführt sein.

Die Erhebungen 12 und 13 können in erste voneinander beabstandete Erhebungen 12 und zweite voneinander beanstandete Erhebungen 13 eingeteilt werden, welche jeweils in einer ersten geraden Reihe und in einer zweiten geraden Reihe am Gewindekern 6 angeordnet sind. Die ersten Erhebungen 12 und die zweiten Erhebungen 13 liegen sich in Umfangsrichtung diametral gegenüber. Die ersten Erhebungen 12 sind zwischen benachbarten Gewindeabschnitten 7 angeordnet und stellen eine Verbindung zwischen diesen her. Alternierend zu den ersten Erhebungen 12 sind in Längsrichtung auf der gegenüberliegenden Seite der Holzschraube 1 die zweiten Erhebungen 13 angeordnet. Eine erste Erhebung 12 wechselt sich somit immer mit einer zweiten Erhebung 13 ab. Die zweiten Erhebungen 13 sind jeweils direkt an einer Gewindeumdrehung 7 des Gewindeabschnitts 5 ausgeführt, wobei sich die zweiten Erhebungen 13 beiderseits einer Gewindeumdrehung 7 in Richtung der benachbarten Gewindeumdrehung 7 erstrecken. Die zweiten Erhebungen 13 verbinden allerdings im Gegensatz zu den ersten Erhebungen 12 die Gewindeumdrehungen 7 nicht miteinander, sondern erstrecken sich im Wesentlichen bis zu jener Position, an welcher auf der gegenüberliegenden Seite der Holzschraube 1 jeweils eine erste Erhebung 12 angeordnet ist.

Durch die alternierende Anordnung der ersten Erhebungen 12 und der zweiten Erhebungen 13 treten einander gegenüberliegende Erhebungen 12 und 13 in Längsrichtung der Holzschraube 1 niemals gleichzeitig auf, sondern nur alternierend. Hierdurch wird eine abschnittsweise Versetzung des Durchmessers des Gewindekerns 6 realisiert. Dies bewirkt beim Einschraubvorgang vorteilhafterweise ein mit der Drehung der Holzschraube 1 oszillierendes und insgesamt äußerst niedriges Einschraubdrehmoment. Die Holzfasern werden hierbei vorteilhafterweise nur vorübergehend zur Seite gedrückt, aber nicht zerschnitten und als Späne ausgetragen.

Wie in Figur 3 ersichtlich, weisen die ersten Erhebungen 12 und die zweiten Erhebungen 13 eine gleich große erste radiale Ausdehnung 14 auf. Die Gewindeumdrehungen 7 weisen eine zweite radiale Ausdehnung 15 auf, welche diese erste radiale Ausdehnung 14 in der Regel überragt. An den Positionen der zweiten Erhebungen 13 reduziert sich die zweite radiale Ausdehnung 15 der Gewindeumdrehungen allerdings auf den Wert der ersten radialen Ausdehnung 14. Diese Ausgestaltung der radialen Ausdehnungen 14 und 15 bewirkt den Vorteil, die Spaltwirkung der erfindungsgemäßen Holzschraube 1 weiter zu reduzieren.

## Patentansprüche

1. Holzschraube (1), umfassend einen zylinderförmigen Schraubenschaft (2), an dessen einem Ende eine Spitze (3) ausgebildet ist, einen Schraubenkopf (4), der an dem anderen Ende des Schraubenschafts (2) ausgebildet ist, sowie zumindest einen Gewindeabschnitt (5), der sich von der Spitze (3) in Richtung des Schraubenkopfes (4) erstreckt, wobei der Gewindeabschnitt (5) einen Gewindekern (6) und eine um den Gewindekern (6) umlaufende Gewindewendel mit mehreren Gewindeumdrehungen (7) aufweist, wobei mehrere aufeinanderfolgende Gewindeumdrehungen (7) Vorsprünge (8a, 8b) aufweisen, welche alternierend im Wesentlichen in Richtung Schraubenkopf (4) und im Wesentlichen in Richtung Spitze (3) ausgebildet sind, **dadurch gekennzeichnet, dass** die Gewindeumdrehungen (7) an den Positionen der Vorsprünge (8a, 8b) radiale Einbuchtungen (9) aufweisen.

2. Holzschraube (1) gemäß Anspruch 1, **dadurch gekennzeichnet, dass** sich jede der Einbuchtungen (9) über die gesamte Ausdehnung des entsprechenden Vorsprungs (8a, 8b) entlang der Gewindeumdrehung (7) erstreckt.

3. Holzschraube (1) gemäß Anspruch 2, **dadurch gekennzeichnet, dass** jeder der Vorsprünge (8a, 8b) ein Volumen an Schraubenmaterial umfasst, welche einem eingesparten Volumen an Schraubenmaterial an der entsprechenden Einbuchtung (9) entspricht.

4. Holzschraube (1) gemäß einem der vorhergehenden Ansprüche, **dadurch gekennzeichnet, dass** die Vorsprünge (8a, 8b), in Eindrehrichtung der Holzschraube (1) gesehen, führende Flanken (10) und nachlaufende Flanken (11) aufweisen, wobei die führenden Flanken (10) abgeschrägt ausgeformt sind.

5. Holzschraube (1) gemäß Anspruch 4, **dadurch gekennzeichnet, dass** die nachlaufenden Flanken (11) im Wesentlichen rechtwinkelig zu den Gewindeumdrehungen (7) abfallen.

6. Holzschraube (1) gemäß einem der vorhergehenden Ansprüche, **dadurch gekennzeichnet, dass** im Bereich des zumindest einen Gewindeabschnitts (5) am Gewindekern (6) mehrere radial nach außen verlaufende Erhebungen (12, 13) angeordnet sind, welche sich zumindest abschnittsweise von der Spitze (3) zum Schraubenkopf (4) erstrecken, wobei die Erhebungen (12, 13) erste voneinander beabstandete Erhebungen (12) und zweite voneinander beabstandete Erhebungen (13) umfassen, wobei die ersten Erhebungen (12) in einer ersten geraden Reihe am Gewindekern (6) angeordnet sind und die zweiten Erhebungen (13) in einer zweiten geraden Reihe am Gewindekern (6) angeordnet sind, wobei die ersten Erhebungen (12) den zweiten Erhebungen (13) in Umfangsrichtung diametral gegenüberliegen, wobei die ersten Erhebungen (12) zwischen benachbarten Gewindeumdrehungen (7) angeordnet und mit diesen verbunden sind, wobei die ersten Erhebungen (12), in Längsrichtung der Holzschraube (1) gesehen, alternierend mit den zweiten Erhebungen (13) angeordnet sind, und wobei die zweiten Erhebungen (13) jeweils an einer Gewindeumdrehung (7) des Gewindeabschnitts (5) angeformt sind und beiderseits dieser Gewindeumdrehung (7) sich in Richtung der jeweils benachbarten Gewindeumdrehungen (7) erstrecken, ohne die benachbarten Gewindeumdrehungen (7) zu erreichen.

7. Holzschraube (1) gemäß Anspruch 6, **dadurch gekennzeichnet, dass** die ersten Erhebungen (12) und die zweiten Erhebungen (13) eine erste radiale Ausdehnung (14) aufweisen, und die Gewindeumdrehungen (7) eine zweite radiale Ausdehnung (15) aufweisen, welche an den Positionen der zweiten Erhebungen (13) der ersten radialen Ausdehnung (14) entspricht, und ansonsten die erste radiale Ausdehnung (14) übertrifft.

## Claims

1. A wood screw (1), including a cylindrical screw shank (2), at the end of which there is formed a tip (3), a screw head (4), which is formed at the other end of the screw shank (2), as well as at least one threaded section (5), which extends from the tip (3) in the direction of the screw head (4), wherein the threaded section (5) has a thread core (6) and a thread winding having several threaded turns (7) circulating the thread core (6),
wherein
several successive threaded turns (7) have projections (8a, 8b), which are formed alternatingly in essentially the direction of the screw head (4) and in essentially the direction of the tip (3), **characterized in that** the threaded turns (7) have radial recesses (9) in the positions of the projections (8a, 8b).

2. The wood screw (1) according to claim 1, **characterized in that** each of the recesses (9) extends across the entire extension of the corresponding projection (8a, 8b) along the threaded turns (7).

3. The wood screw (1) according to claim 2, **characterized in that** each of the projections (8a, 8b) comprises a volume of screw material, which corresponds to a volume of screw material reduced at the respective recess (9).

4. The wood screw (1) according to any of the preceding claims, **characterized in that** the projections (8a, 8b) have leading edges (10) and trailing edges (11), seen in the tightening direction of the wood screw (1), wherein the leading edges (10) are configured bevelled.

5. The wood screw (1) according to claim 4, **characterized in that** the trailing edges (11) are inclined essentially perpendicularly to the threaded turns (7).

6. The wood screw (1) according to any of the preceding claims, **characterized in that** in the area of at least one threaded section (5) at the thread core (6) there are arranged several elevations (12, 13) extending radially outwards, which extend at least in some portions from the tip (3) towards the screw head (4), wherein the elevations (12, 13) include first elevations (12) spaced apart from each other and second elevations (13) spaced apart from each other, wherein the first elevations (12) are arranged in a first straight row on the thread core (6) and wherein the second elevations (13) are arranged in a second straight row on the thread core (6), wherein the first elevations are diametrically opposed to the second elevations (13) in the circumferential direction, wherein the first elevations (12) are arranged in-between adjacent threaded turns (7) and connected therewith, wherein the first elevations (12), seen in the longitudinal direction of the wood screw (1), are arranged alternatingly with the second elevations (13), and wherein the second elevation (13) are moulded respectively to one threaded turn (7) of the threaded section (5) and extend on both sides of this threaded turn (7) in the direction of the respectively adjacent threaded turn (7), without reaching the adjacent threaded turns (7).

7. The wood screw (1) according to claim 6, **characterized in that** the first elevations (12) and the second elevations (13) have a first radial extension (14) and the threaded turns (7) have a second radial extension (15), which corresponds in the position of the second elevations (13) the first radial extension (14), otherwise exceeding the first radial extension (14).

## Revendications

1. Vis à bois (1) comprenant une tige de vis cylindrique (2) à une extrémité de laquelle est formée une pointe (3), une tête de vis (4) qui est formée à l'autre extrémité de la tige de vis (2), ainsi qu'au moins un segment fileté (5) qui s'étend à partir de la pointe (3) en direction de la tête de vis (4), sur laquelle le segment fileté (5) présente un noyau de filet (6) et une spirale de filet avec plusieurs tours de filet (7) entourant le noyau de filet (6), plusieurs tours de filet (7) successifs présentant des saillies (8a, 8b) qui sont formées alternativement sensiblement en direction de la tête de vis (4) et sensiblement en direction de la pointe (3), **caractérisée en ce que** les tours de filet (7) présentent des échancrures radiales (9) aux emplacements des saillies (8a, 8b).

2. Vis à bois (1) selon la revendication 1, **caractérisée en ce que** chacune des échancrures (9) s'étend sur toute l'étendue de la saillie (8a, 8b) correspondante le long du tour de filet (7).

3. Vis à bois (1) selon la revendication 2, **caractérisée en ce que** chacune des saillies (8a, 8b) comprend un volume de matériau de vis qui correspond à un volume de matériau de vis épargné au niveau de l'échancrure (9) correspondante.

4. Vis à bois (1) selon une des revendications précédentes, **caractérisée en ce que** les saillies (8a, 8b), vues dans la direction de serrage de la vis à bois (1), présentent des flancs avant (10) et des flancs arrière (11), les flancs avant (10) étant biseautés.

5. Vis à bois (1) selon la revendication 4, **caractérisée en ce que** les flancs arrière (11) descendent sensiblement perpendiculairement aux tours de filet (7).

6. Vis à bois (1) selon une des revendications précédentes, **caractérisée en ce que**, dans la région de l'au moins un segment fileté (5), sont disposées sur le noyau de filet (6) plusieurs crêtes (12, 13) courant radialement vers l'extérieur qui s'étendent au moins partiellement de la pointe (3) à la tête de vis (4), les crêtes (12, 13) comprenant des premières crêtes (12) distantes les unes des autres et des deuxièmes crêtes (13) distantes les unes des autres, les premières crêtes (12) étant disposées dans une première rangée rectiligne sur le noyau de filet (6) et les deuxièmes crêtes (13) étant disposées dans une deuxième rangée rectiligne sur le noyau de filet (6), les premières crêtes (12) étant diamétralement opposées aux deuxièmes crêtes (13) dans le sens périphérique, les premières crêtes (12) étant disposées entre des tours de filet (7) voisins et reliées avec ceux-ci, les premières crêtes (12), vues dans la direction longitudinale de la vis à bois (1), étant disposées alternativement avec les deuxièmes crêtes (13) et les deuxièmes crêtes (13) étant formées respectivement sur un tour de filet (7) du segment fileté (5) et s'étendant de part et d'autre de ce tour de filet (7) en direction des tours de filet (7) respectivement voisins sans atteindre les tours de filet (7) voisins.

7. Vis à bois (1) selon la revendication 6, **caractérisée en ce que** les premières crêtes (12) et les deuxièmes crêtes (13) présentent une première étendue radiale (14) et les tours de filet présentent une deuxième étendue radiale (15) qui correspond à la première étendue radiale (14) aux emplacements des deuxièmes crêtes (13) et dépasse sinon la première étendue radiale (14).
